# EUROPEAN PATENT APPLICATION

(11) **EP 4 644 879 A1**
(43) Date of publication of application: **05.11.2025**
(21) Application number: 24905107.9
(22) Date of filing: 10.05.2024
(51) Int. Cl.: G01N 21/88

(54) **BATTERY CELL TAB DEFECT DETECTION METHOD AND TAB DEFECT DETECTION DEVICE**

(30) Priority: 09.01.2024 CN 202410030247
(71) Applicant: Contemporary Amperex Technology Co., Ltd., Ningde, Fujian 352100 (CN)
(72) Inventor: YI, Tingting, Ningde, Fujian 352100 (CN); HU, Liangjin, Ningde, Fujian 352100 (CN); YU, Yan, Ningde, Fujian 352100 (CN); MA, Lin, Ningde, Fujian 352100 (CN)
(74) Representative: Gong, Jinping
(86) International application number: PCT/CN2024/092229
(87) International publication number: WO 2025/148201

(57) **Abstract**

The present disclosure relates to the field of batteries, and provides a tab defect detection method and a tab defect detection device for a battery cell. The tab defect detection method includes: obtaining a first image of a first side surface and a second image of an opposite second side surface of a tab stack of the battery cell, where the first and second side surfaces are two surfaces that are parallel to a stacking direction of the tab stack and extend along a height direction of a tab; obtaining a first detection result based on the first image and a second detection result based on the second image, where the first and second detection results indicate: whether the tab in the tab stack has a first-type defect; and a position of the first-type defect, the first-type defect including a tab line abnormality, and the position of the first-type defect indicating a relative position of the first-type defect relative to a height of the tab; and determining, based on the first and second detection results, whether the tab stack has a folding-to-film region defect. The method can more accurately detect whether a tab folding defect exists to determine whether a cell is qualified.

## Description

### CROSS-REFERENCE TO RELATED APPLICATIONS

Embodiments of the present disclosure are based upon and claim priority to Chinese Patent Application No. 202410030247.1, filed on January 09, 2024 and entitled "TAB DEFECT DETECTION METHOD AND TAB DEFECT DETECTION DEVICE FOR BATTERY CELL", which is incorporated herein by reference in its entirety.

### TECHNICAL FIELD

The present disclosure relates to the field of batteries, and in particular, to a tab defect detection method and a tab defect detection device for a battery cell.

### BACKGROUND

Cell production processes of a lithium battery assembly section mainly include a winding process and a stacking process. In either the winding process or the stacking process, due to small thickness and low strength of cathode and anode tabs (for example, the material of the tabs is an aluminum foil or a copper foil) of a cell, defects such as folding and wrinkling easily occur during the production of the cell. Therefore, whether a tab folding defect exists needs to be detected to determine whether the cell is qualified.

### SUMMARY

In view of the foregoing problem, the present disclosure provides a tab defect detection method and a tab defect detection device for a battery cell, which can more accurately detect whether a tab folding defect exists to determine whether a cell is qualified.

In a first aspect, the present disclosure provides a tab defect detection method for a battery cell, including: obtaining a first image of a first side surface of a tab stack of the battery cell and a second image of a second side surface of the tab stack opposite to the first side surface, where the first side surface and the second side surface are two surfaces that are parallel to a stacking direction of the tab stack and extend along a height direction of a tab in the tab stack; obtaining a first detection result of tab defect detection performed based on the first image and a second detection result of tab defect detection performed based on the second image, where the first detection result and the second detection result indicate: whether the tab in the tab stack has a first-type defect; and a position of the first-type defect, the first-type defect including a tab line abnormality, and the position of the first-type defect indicating a relative position of the first-type defect relative to a height of the tab; and determining, based on the first detection result and the second detection result, whether the tab stack has a folding-to-film region defect.

In the foregoing first aspect, because whether the tab stack has the folding-to-film region defect is determined by comprehensively considering defect detection results and defect positions of the first image and the second image of the two side surfaces of the tab stack, the determination of a slight folding or wrinkling defect of a tab as a serious defect (i.e., the folding-to-film region defect) can be avoided, thereby significantly improving the cell yield and reducing the workload of manual redetermination.

In a second aspect, a tab defect detection device for a battery cell is provided, including: a first camera, a second camera, a controller, and a processor. The first camera is opposite to a first side surface of a tab stack of the battery cell, and is configured to capture a first image of the first side surface. The second camera is opposite to a second side surface of the tab stack, and is configured to capture a second image of the second side surface, where the first side surface and the second side surface are two surfaces that are parallel to a stacking direction of the tab stack and extend along a height direction of a tab in the tab stack. The controller is communicatively connected to the first camera and the second camera, and is configured to obtain the first image and the second image, and transmit the first image and the second image to the processor. The processor is communicatively connected to the controller, and is configured to: perform tab defect detection based on the first image, to obtain a first detection result; and perform tab defect detection based on the second image to obtain a second detection result, where the first detection result and the second detection result indicate: whether the tab in the tab stack has a first-type defect; and a position of the first-type defect, the first-type defect including a tab line abnormality, and the position of the first-type defect indicating a relative position of the first-type defect relative to a height of the tab. The controller is further configured to determine, based on the first detection result and the second detection result, whether the tab stack has a folding-to-film region defect.

The above description only refers to an overview of the technical solutions of the present disclosure. In order to understand the technical means of the present disclosure more clearly, it can be implemented according to the content of the description. In order to make the foregoing and other objectives, features and advantages of the present disclosure more apparent, specific implementations of the present disclosure are listed below.

It should be understood that the above general descriptions and the following detailed descriptions are merely for exemplary and explanatory purposes, and cannot limit the technical solutions of the present disclosure.

### BRIEF DESCRIPTION OF THE DRAWINGS

Various other advantages and benefits will become apparent to those of ordinary skill in the art upon reading the following detailed description of the preferred implementations. The accompanying drawings are merely used for illustrating the preferred implementations and are not intended to constitute a limitation on the present disclosure. In addition, in all the accompanying drawings, same parts are indicated by the same reference numerals. In the accompanying drawings:
FIG. 1 is a schematic top view of a battery cell according to one embodiment of the present disclosure;
FIG. 2 is a schematic flowchart of a tab defect detection method for a battery cell according to one embodiment of the present disclosure;
FIG. 3 is a schematic diagram for illustrating an example of a defect position determining criterion according to one embodiment of the present disclosure;
FIG. 4 is a schematic diagram for illustrating an example of a defect position determining criterion according to one embodiment of the present disclosure;
FIG. 5 is a schematic diagram for illustrating an example of a defect position determining criterion according to one embodiment of the present disclosure;
FIG. 6 is a schematic diagram for illustrating an example of a defect position determining criterion according to one embodiment of the present disclosure;
FIG. 7 is a schematic flowchart of a tab defect detection method for a battery cell according to another embodiment of the present disclosure;
FIG. 8 is a schematic flowchart for illustrating a method for determining folding of a tab into a film region according to one embodiment of the present disclosure; and
FIG. 9 is a schematic diagram showing a composition structure of a tab defect detection device according to one embodiment of the present disclosure.

Reference numerals in the specific implementations are as follows:
battery cell 1; cell body 10; first tab stack 11; second tab stack 12; membrane 13; first side surface 111; second side surface 112; tab defect detection device 300; first camera 301; second camera 303; controller 303; and processor 304.

### DETAILED DESCRIPTION

The embodiments of the technical solutions of the present disclosure will be described in detail below with reference to the accompanying drawings. The following embodiments are only used for illustrating the technical solutions of the present disclosure more explicitly, and are thus only interpreted as examples, rather than used to limit the protection scope of the present disclosure.

Unless otherwise defined, meanings of all technical and scientific terms used in this specification are the same as those usually understood by a person skilled in the art to which the present disclosure belongs. Terms used in this specification are merely intended to describe objectives of specific embodiments, but are not intended to limit the present disclosure. The terms "include/comprise" and "have" and any variations thereof in the specification and claims of the present disclosure and the Brief Description of the Drawings are intended to cover non-exclusive inclusions.

In the description according to the embodiments of the present disclosure, the technical terms "first", "second", and the like are only used for distinguishing different objects, and should not be understood as indicating or implying relative importance or implying the number, specific order or primary and secondary relationship of indicated technical features. In the description according to the embodiments of the present disclosure, "a plurality of" means two or more, unless otherwise expressly and specifically defined.

Reference herein to "an embodiment" means that a particular feature, structure, or characteristic described in connection with the embodiment may be included in at least one embodiment of the present disclosure. The presence of the phrase in various places in the specification does not necessarily refer to the same embodiment, nor is it an independent or alternative embodiment that is mutually exclusive from other embodiments. A person skilled in the art explicitly or implicitly understands that the embodiments described in the specification may be combined with other embodiments.

In the description of the embodiments of the present disclosure, the term "and/or" is merely an association to describe associated objects, and means that there are three relationships. For example, A and/or B may mean that A exists alone, A and B exist at the same time, and B exists alone. In addition, the character "/" in this specification generally indicates an "or" relationship between the associated objects.

In the description of the embodiments of the present disclosure, the term "a plurality of" means two or more (including two). Similarly, "a plurality of groups" means two or more groups (including two groups), and "a plurality of pieces" means two or more pieces (including two pieces).

In the description according to the embodiments of the present disclosure, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the embodiments of the present disclosure and simplifying the description, rather than indicating or implying that the involved device or element should have a specific orientation or should be configured or operated in the specific orientation, therefore, they cannot be understood as limiting the embodiments of the present disclosure.

In the description of the embodiments of the present disclosure, unless otherwise explicitly specified and limited, the technical terms "mount", "connect", "connection", and "fix" should be understood in a broad sense. For example, the connection may be a fixed connection, a detachable connection, or an integral connection. Alternatively, the connection may be a mechanical connection or an electrical connection. Alternatively, the connection may be a direct connection, an indirect connection through an intermediary, or internal communication between two elements or mutual action relationship between two elements. A person of ordinary skill in the art may understand specific meanings of the terms in the embodiments of the present disclosure based on specific situations.

Methods for manufacturing a bare battery cell mainly include two types: winding and stacking. Generally, a cell electrode plate needs to be die-cut, so as to reserve only a part of a metal foil through which a current needs to pass. The part of the metal foil is a tab. Because the metal foil used in the electrode plate has an extremely small thickness and has relatively low strength, the tab is prone to defects such as folding, wrinkling, and shrinking during production.

For example, in a winding process, after winding, a plurality of tabs overlap (which may be referred to as a tab stack below). Therefore, it is difficult to detect, through imaging, a degree of inward or longitudinal folding of each tab. Because the metal foil of the tab (for example, a copper foil or an aluminum foil) is light and thin, during material handling, tab deformation may be caused on the tab of the entire batch of materials due to an extremely small external force collision. In addition, during winding, the tab moves at a high speed during material introduction and roller bypassing and a spacing between the tab and a winding flattening plate is small. Therefore, the tab is prone to interference and collision, resulting in folding of the tail of the tab.

In a conventional bare cell tab defect detection method, left and right side surfaces of a tab stack are photographed for image capture through a 2D camera or a charge-coupled device (CCD) camera. A tab stack image of one of the left and right side surfaces is detected by using an algorithm such as an artificial intelligence (AI) algorithm. When it is detected that similarity with a feature in a defect library reaches a set threshold, a determining result is outputted.

However, in the conventional tab defect detection method, only a single-side tab stack image is considered, and an impact degree of a detected defect on safety quality of a cell cannot be determined. During actual production, due to the particularity of a tab material, even if the tab stack is slightly folded or wrinkled, the slight folding or wrinkling may be detected by the algorithm, thereby reducing the yield. In some cases, the yield reduction causes manual redetermination, thereby increasing the manual workload.

In view of the foregoing situation, the present disclosure is provided. In the present disclosure, two side images of left and right side surfaces of a tab stack are comprehensively considered, to determine whether a tab in the tab stack has a possibility of being folded into a film region. A battery cell is determined to be unqualified only in a case that the tab has a possibility of being folded into the film region. In this way, a product yield can be significantly improved, and a workload of manual redetermination can be reduced.

The battery cell is a component in a battery that undergoes electrochemical reactions. The cell is mainly formed by winding or stacking a positive electrode plate and a negative electrode plate, and a separator is generally provided between the positive electrode plate and the negative electrode plate. Parts of the positive electrode plate and the negative electrode plate with active substances constitute a body portion of the cell, while parts of the positive electrode plate and the negative electrode plate without active substances separately constitute a tab. A positive electrode tab and a negative electrode tab may be located at one end of the body portion together or at two ends of the body portion separately. During charging and discharging of the battery, a positive electrode active substance and a negative electrode active substance react with an electrolyte, and the tabs are connected to electrode terminals of the battery to form a current loop.

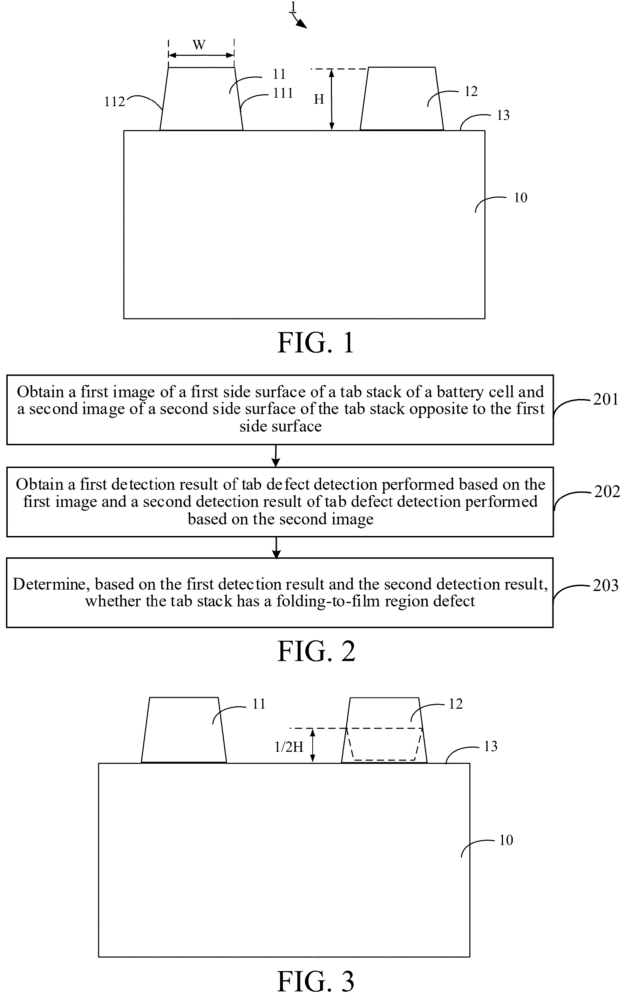

FIG. 1 is a schematic top view of a battery cell 1. The battery cell 1 includes a cell body 10, a first tab stack 11, and a second tab stack 12. For example, the first tab stack 11 and the second tab stack 12 may respectively correspond to a cathode tab stack and an anode tab stack. In FIG. 1, the first tab stack 11 and the second tab stack 12 are stacked in a direction perpendicular to the page. However, this type of stack is not shown in the figure. The first tab stack 11 has a first side surface 111 (a right side surface in the figure) and a second side surface 112 (a left side surface in the figure). The second tab stack 12 also has a first side surface and a second side surface (no reference sign is marked in the figure).

The first tab stack 11 and the second tab stack 12 may have a roughly trapezoidal shape. However, the present disclosure is not limited thereto, and the shape may be any shape such as a rectangle.

As shown in FIG. 1, the first tab stack 11 and the second tab stack 12 have a tab height H, which represents a height from a surface of the battery cell 1 to a tab end (top end). In addition, the first tab stack 11 and the second tab stack 12 have a tab width W, which represents a length of the tab end between the first side surface 111 and the second side surface 112.

In FIG. 1, an outermost layer of the surface of the battery cell 1 is covered with a membrane 13. The membrane 13 is configured to protect the battery cell 1 and to separate and isolate the battery cell 1 from the outside. In the present disclosure, a region in which the membrane 13 is located may alternatively be referred to as a film region, a diaphragm region, or a membrane region. If a tab in the tab stack is folded onto the film region, even if the tab does not break through the membrane but is only in contact with the membrane, this case is considered in the present disclosure as that the tab stack or the tab has a folding-to-film region defect. This is because in a subsequent production or use process of the battery, the tab may finally break through the membrane, and consequently, there is a potential risk of short-circuit of the battery.

On the contrary, if there is no folding-to-film region defect, even if a tab in the tab stack has a defect such as folding, wrinkling, or shrinking, the battery cell 1 in this case is considered in the present disclosure as being qualified because such a slight defect does not actually affect subsequent production and use of the battery. Shrinking refers to a case that in an image of the tab stack, a tab shrinks inward, and therefore the tab cannot be seen in the image.

Therefore, according to the present disclosure, for the first image of the first side surface 111 and the second image of the second side surface 112 of the tab stack 11 or 12, a defect detection algorithm such as an AI-based detection algorithm is used for determining whether there is a visual defect such as folding or wrinkling. Then, determining results for the first side surface 111 and the second side surface 112 are combined, to determine whether the tab in the tab stack has a folding-to-film region defect.

The following describes a tab defect detection method according to one embodiment of the present disclosure with reference to FIG. 1 and FIG. 2. FIG. 2 is a flowchart of a tab defect detection method for a battery cell according to one embodiment of the present disclosure.

As shown in FIG. 2, the tab defect detection method includes step 201, step 202, and step 203. 201: Obtain a first image of a first side surface 111 of a tab stack of a battery cell and a second image of a second side surface 112 of the tab stack opposite to the first side surface 111, where the first side surface and the second side surface are two surfaces of the tab stack that are parallel to a stacking direction (a direction perpendicular to the page in FIG. 1) of the tab stack and extend along a height direction (an up-down extending direction of an arrow of a height H shown in FIG. 1) of a tab in the tab stack. 202: Obtain a first detection result of tab defect detection performed based on the first image and a second detection result of tab defect detection performed based on the second image, where the first detection result and the second detection result indicate: whether the tab in the tab stack has a first-type defect; and a position of the first-type defect when the first-type defect exists, the first-type defect including a tab line abnormality, and the position of the first-type defect indicating a relative position of the first-type defect relative to a height of the tab. 203: Determine, based on the first detection result and the second detection result, whether the tab stack has a folding-to-film region defect.

In the foregoing method, the first side surface and the second side surface may be any one of two side surfaces of the same tab stack 11 or 12. The first side surface may be a left side surface, and the second side surface may be a right side surface. Alternatively, the first side surface may be a right side surface, and the second side surface may be a left side surface. In addition, the foregoing method may be separately performed on the tab stacks 11 and 12, so as to separately determine whether the two tab stacks 11 and 12 of the battery cell 1 have a folding-to-film region defect. In a case that the two tab stacks 11 and 12 do not have the folding-to-film region defect, it may be determined that the tab of the battery cell 1 does not have the folding-to-film region defect.

In the present disclosure, the tab line abnormality refers to an abnormality caused by defects such as folding and wrinkling of edge lines of the tabs in the tab stack in the first image and the second image. The abnormality may be detected by analyzing the images using an algorithm such as an AI algorithm. In one embodiment, for example, the relative position of the first-type defect relative to the height of the tab may represent a distance (for example, a distance represented by millimeter or centimeter) from a position of the defect to a root of the tab (i.e., a position of the tab stacks 11 and 12 flush with a surface of the battery cell 1), or may represent a ratio of the distance between the position of the defect and the root of the tab to the height of the tab.

In the foregoing embodiment, as an example, in a case that the distance from the position of the defect to the root of the tab is less than or equal to a particular distance threshold (for example, 1 mm or 2 mm), it may be determined that the tab stack has the folding-to-film region defect. As another example, in a case that the position of the defect is represented by the foregoing ratio, when the foregoing ratio of one or both of the first detection result and the second detection result is less than or equal to a particular ratio threshold (for example, 1/5 or 1/4), it may be determined that the tab stack has the folding-to-film region defect.

In the foregoing embodiment, because whether the tab stack has the folding-to-film region defect is determined by comprehensively considering defect detection results and defect positions of the first image and the second image of the two side surfaces of the tab stack, the determination of a slight folding or wrinkling defect of a tab as a serious defect (i.e., the folding-to-film region defect) can be avoided, thereby significantly improving the cell yield and reducing the workload of manual redetermination.

More specifically, in the conventional technology, whether a defect such as folding or wrinkling exists is determined only for a single-side image of a tab stack. If the defect exists, the tab stack is considered to have a defect, and a battery cell is determined to be unqualified. In the foregoing embodiment of the present disclosure, if the tab in the tab stack has a tab line abnormality, and consequently, a defect such as folding and wrinkling may exist, it is further comprehensively determined, for two side images of each tab stack, whether a folding-to-film region defect may exist. Therefore, the severity of the tab line abnormality can be distinguished, so that many tab line abnormalities that do not actually affect safety in a subsequent production and use process of the battery cell are considered as qualified cases.

In one embodiment, the foregoing tab defect detection method may further include: determining that a tab defect detection result of the battery cell is unqualified in response to the tab stack having the folding-to-film region defect.

In this way, the tab defect detection result of the battery cell is determined to be unqualified only when it is determined that the tab stack has the folding-to-film region defect. Therefore, the yield of qualified products can be improved, and unnecessary manual redetermination can be reduced.

In one embodiment, step 203 of determining whether the tab stack has a folding-to-film region defect may include: determining, in a case that both the first detection result and the second detection result indicate that the tab in the tab stack has a first-type defect, whether the first-type defect indicated in the first detection result and the first-type defect indicated in the second detection result correspond to a same tab; determining, in a case that the first-type defect indicated in the first detection result and the first-type defect indicated in the second detection result correspond to the same tab, whether the position of the first-type defect indicated in the first detection result and the position of the first-type defect indicated in the second detection result meet a first criterion; and determining, in a case that the first criterion is met, that the tab stack has the folding-to-film region defect.

In the foregoing embodiment, for example, whether the first-type defects in the first detection result and the second detection result correspond to a same tab (i.e., a tab on a same layer) may be determined according to a tab layer of an image of the tab stack on which the tab corresponding to the first-type defect is located.

In a case that the first-type defect indicated in the first detection result and the first-type defect indicated in the second detection result correspond to a same tab, an appropriate defect position determining criterion (for example, the foregoing first criterion) meeting an actual situation may be determined according to an original shape (i.e., a shape in a case that there is no defect such as folding or wrinkling), a size, and engineering practical experience of the same tab, and then whether the tab stack has a folding-to-film region defect is determined according to whether the position of the first-type defect indicated in the first detection result and the position of the first-type defect indicated in the second detection result meet the defect position determining criterion. Therefore, the accuracy of determining the folding-to-film region defect can be improved.

In the foregoing embodiment, as an example, the first criterion may represent that a distance between the position of the first-type defect indicated in the first detection result and the root of the tab and a distance between the position of the first-type defect indicated in the second detection result and the root of the tab are both less than or equal to a particular distance threshold (for example, 1 mm or 2 mm). As another example, in a case that the position of the defect is indicated by the foregoing ratio, the first criterion may represent that both a ratio of the distance between the position of the first-type defect indicated in the first detection result and the root of the tab to the height of the tab and a ratio of the distance between the position of the first-type defect indicated in the second detection result and the root of the tab to the height of the tab do not exceed a first threshold. The first threshold may be less than or equal to 1/2. For example, the first threshold may be 1/2, 2/5, or the like.

FIG. 3 shows a schematic diagram for illustrating a defect position determining criterion according to one embodiment of the present disclosure. The defect position determining criterion is a specific example of the first criterion in the foregoing embodiment. In this example, as shown in FIG. 3, in a case that first-type defects on a left side and a right side of the tab stack 12 correspond to a same tab, and a ratio of a distance between the first-type defects on the left side and the right side and a root of the tab to a height of the tab does not exceed a first threshold (for example, 1/2*H shown in FIG. 3), an end of the tab may be folded or in contact with the membrane 13 on the surface of the battery cell 1.

In the foregoing embodiment, as still another example, in a case that the position of the defect is indicated by the foregoing ratio, the first criterion may represent that the ratio of the distance between the position of the first-type defect indicated in the first detection result and the root of the tab to the height of the tab does not exceed a second threshold, and the ratio of the distance between the position of the first-type defect indicated in the second detection result and the root of the tab to the height of the tab does not exceed a third threshold. The second threshold may be, for example, a threshold greater than 1/2 (for example, 4/5 or 2/3), and the third threshold may be, for example, a threshold less than 1/2 (for example, 1/3 or 2/5).

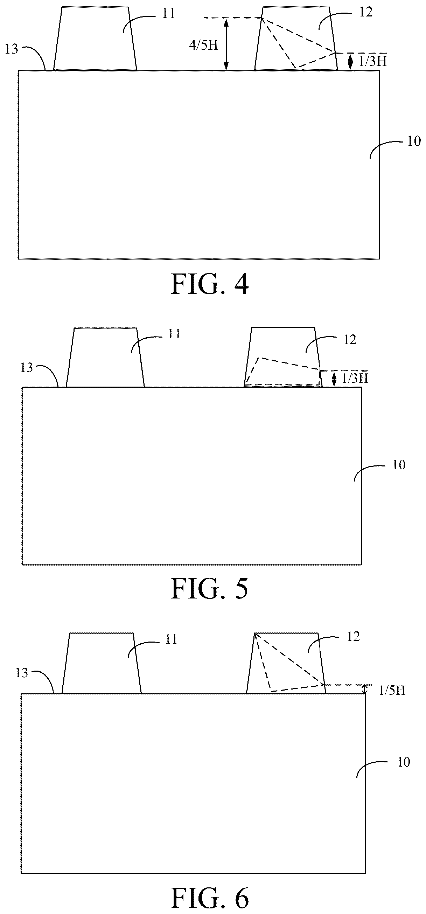

FIG. 4 shows a schematic diagram for illustrating a defect position determining criterion according to another embodiment of the present disclosure. The defect position determining criterion is another specific example of the first criterion in the foregoing embodiment. In this example, as shown in FIG. 4, in a case that the first-type defects in the left side and the right side of the tab stack 12 correspond to a same tab, if the ratio of the distance between the position of the first-type defect indicated in the first detection result and the root of the tab to the height of the tab does not exceed a second threshold (for example, 4/5*H shown in the left side of the tab stack 12 in FIG. 4), and the ratio of the distance between the position of the first-type defect indicated in the second detection result and the root of the tab to the height of the tab does not exceed a third threshold (for example, 1/3*H shown in the right side of the tab stack 12 in FIG. 4), an end of the tab may be folded or in contact with the membrane 13 on the surface of the battery cell 1.

It should be noted that a dashed triangle shown in FIG. 4 merely schematically represents a possible folding situation of a tab on a layer of the tab stack 12. In practice, depending on different original shapes of the tab and different folding situations, a folded part of a layer of tabs may have any other shape, for example, a partial trapezoidal shape, a partial rectangular shape, or another polygonal or irregular shape.

According to one embodiment of the present disclosure, the first detection result and the second detection result may further indicate whether the tab stack has a second-type defect, where the second-type defect may include a tab line loss. In a side image of the tab stack, when a tab is completely folded or shrinks, a performance feature of the tab is a tab line loss, which may alternatively be referred to as a tab or tab layer loss.

According to the foregoing embodiment, in the presence of a tab line loss, whether the tab stack has a folding-to-film region defect may be determined by comprehensively considering the tab line loss and the position of the first-type defect, thereby more comprehensively and accurately determining whether the defect exists.

According to one embodiment of the present disclosure, the determining whether the tab stack has a folding-to-film region defect may include: determining, in a case that the first detection result indicates existence of the first-type defect and the second detection result indicates existence of the second-type defect, whether the first-type defect and the second-type defect correspond to a same tab; determining, in a case that the first-type defect and the second-type defect correspond to the same tab, whether the ratio of the distance between the position of the first-type defect indicated in the first detection result and the root of the tab to the height of the tab does not exceed a fourth threshold; and determining, in a case that the ratio does not exceed the fourth threshold, that the tab stack has the folding-to-film region defect. For example, the fourth threshold may be a ratio less than or equal to 1/3.

According to the foregoing embodiment, in the presence of a tab line loss, whether the tab stack has a folding-to-film region defect may be determined by comprehensively considering the tab line loss and the position of the first-type defect based on a particular defect position threshold, thereby more comprehensively and accurately determining whether the defect exists.

FIG. 5 shows a schematic diagram for illustrating a defect position determining criterion according to another embodiment of the present disclosure. The defect position determining criterion is a determining criterion example in a case of a tab line loss on one side of the tab stack in the foregoing embodiment. In this example, as shown in FIG. 5, a left side surface of the tab stack has a second-type defect (i.e., a tab line loss, or referred to as a tab or tab layer loss), and a right side surface has a first-type defect (i.e., a tab line abnormality such as folding or wrinkling). The second-type defect on the left side and the first-type defect on the right side of the tab stack 12 shown in FIG. 5 correspond to a same tab. In this case, if the ratio of the distance between the position of the first-type defect indicated in the first detection result on the right side and the root of the tab to the height of the tab does not exceed a fourth threshold (for example, 1/3*H shown on the right side of the tab stack 12 in FIG. 5), an end of the tab may be folded or in contact with the membrane 13 on the surface of the battery cell 1.

According to one embodiment of the present disclosure, the determining whether the tab stack has a folding-to-film region defect may include: determining, in a case that the first detection result indicates existence of the first-type defect and the second detection result indicates nonexistence of the first-type defect and the second-type defect in the tab corresponding to the first-type defect, whether the ratio of the distance between the position of the first-type defect indicated in the first detection result and the root of the tab to the height of the tab does not exceed a fifth threshold; and determining, in a case that the ratio does not exceed the fifth threshold, that the tab stack has the folding-to-film region defect. For example, the fifth threshold may be a ratio less than or equal to 1/5.

According to the foregoing embodiment, in a case that a first-type defect exists on one side of the tab stack and a tab corresponding to the first-type defect has neither the first-type defect nor a second-type defect on the other side, it may be determined whether a ratio of a distance between a position of the first-type defect on the side and a root of the tab to a height of the tab does not exceed a fifth threshold. If the ratio does not exceed the fifth threshold, the tab stack may have a folding-to-film region defect. Therefore, in a case that one side of the tab has the first-type defect and the other side does not have the defect, whether the tab stack has the folding-to-film region defect may be determined by comprehensively considering cases of two sides, thereby more comprehensively and accurately determining whether the defect exists.

FIG. 6 shows a schematic diagram for illustrating a defect position determining criterion according to another embodiment of the present disclosure. The defect position determining criterion is a determining criterion example in the foregoing embodiment in a case that a first-type defect exists on one side of the tab stack and a tab corresponding to the first-type defect has neither the first-type defect nor a second-type defect on the other side. In this example, as shown in FIG. 6, the tab in the tab stack does not have the first-type defect and the second-type defect on the left side surface, and the tab has the first-type defect on the right side surface. If the ratio of the distance between the position of the first-type defect on the right side and the root of the tab to the height of the tab does not exceed a fifth threshold (for example, 1/5*H shown on the right side of the tab stack 12 in FIG. 6), an end of the tab may be folded or in contact with the membrane 13 on the surface of the battery cell 1.

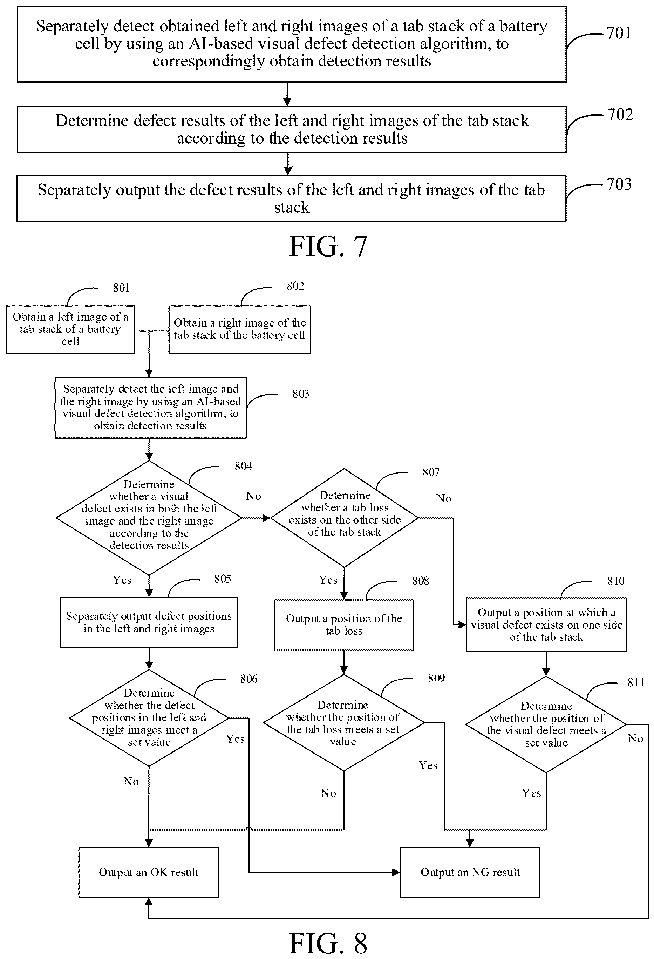

FIG. 7 is a schematic flowchart of a tab defect detection method for a battery cell according to another embodiment of the present disclosure. As shown in FIG. 7, the method includes the following steps:
Step 701: Separately detect obtained left and right images of a tab stack of a battery cell by using an AI-based visual defect detection algorithm, to correspondingly obtain detection results.
Step 702: Determine defect results of the left and right images of the tab stack according to the detection results.
Step 703: Separately output the defect results of the left and right images of the tab stack.

FIG. 8 shows a method for determining folding of a tab into a film region according to one embodiment of the present disclosure. As shown in FIG. 8, the method includes the following steps:
Step 801: Obtain a left image of a tab stack of a battery cell.
Step 802: Obtain a right image of the tab stack of the battery cell.
Step 803: Separately detect the left image and the right image by using an AI-based visual defect detection algorithm, to obtain detection results.
Step 804: Determine whether a visual defect exists in both the left image and the right image according to the detection results. If the visual defect exists at the same time, step 805 is performed. If a visual defect exists on one side of the tab stack and the tab stack loss may exist on the other side, step 807 is performed.
Step 805: Separately output defect positions in the left and right images.
Step 806: Determine whether the defect positions in the left and right images meet a set value. If the set value is met, an NG result is outputted. If the set value is not met, an OK result is outputted.

Herein, the set value is within a region distant from the root of the tab by 1/2 of the height of the tab, or within a region distant from the root of the tab by 4/5 of the height of the tab on one side and within a region distant from the root of the tab by 1/3 of the height of the tab on the other side.

Step 807: Determine whether a tab loss exists on the other side of the tab stack. If the tab loss exists, step 808 is performed. If the tab loss does not exist, step 810 is performed.

Step 808: Output a position of the tab loss.

Step 809: Determine whether the position of the tab loss meets a set value. If the set value is met, an NG result is outputted. If the set value is not met, an OK result is outputted.

Herein, the set value is within a region distant from the root of the tab by 1/3 of the height of the tab.

Step 810: Output a position at which a visual defect exists on one side of the tab stack.

Step 811: Determine whether the position of the visual defect meets a set value. If the set value is met, an NG result is outputted. If the set value is not met, an OK result is outputted.

Herein, the set value is within a region distant from the root of the tab by 1/5 of the height of the tab.

A plurality of specific examples of the tab defect detection method for a battery cell according to the present disclosure are described above. By using the foregoing tab defect detection method, it may be determined that the tab stack has a folding-to-film region defect only when any one of the foregoing cases that a tab or a tab layer in the tab stack may have a folding-to-film region defect occurs, so that a large quantity of other cases in which only a slight defect of the tab or the tab layer exists are determined as not having the folding-to-film region defect and as being qualified, thereby significantly improving the yield of the battery cell and reducing costs of manual redetermination of whether the battery cell is qualified.

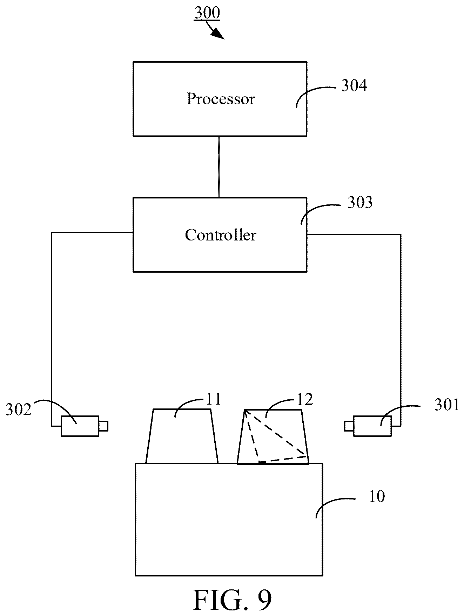

According to another aspect of the present disclosure, as shown in FIG. 9, a tab defect detection device 300 of a battery cell 1 is further provided, including: a first camera 301, opposite to a first side surface (a right side surface of a tab stack 12 in the figure) of a tab stack of the battery cell 1, and configured to capture a first image of the first side surface; a second camera 302, opposite to a second side surface (a left side surface of the tab stack 12 in the figure) of the tab stack, and configured to capture a second image of the second side surface, where the first side surface and the second side surface are two surfaces that are parallel to a stacking direction of the tab stack and extend along a height direction of a tab in the tab stack; a controller 303, communicatively connected to the first camera 301 and the second camera 302, and configured to obtain the first image and the second image, and transmit the first image and the second image to a processor 304; and the processor 304, communicatively connected to the controller 303, and configured to: perform tab defect detection based on the first image, to obtain a first detection result; and perform tab defect detection based on the second image to obtain a second detection result, where the first detection result and the second detection result indicate: whether the tab in the tab stack has a first-type defect; and a position of the first-type defect when the first-type defect exists, the first-type defect including a tab line abnormality, and the position of the first-type defect indicating a relative position of the first-type defect relative to a height of the tab. The controller 303 is further configured to determine, based on the first detection result and the second detection result, whether the tab stack has a folding-to-film region defect.

In FIG. 9, to highlight the tab defect detection device 300 used as a main drawing object, the battery cell 1 is drawn to be relatively small, and the second tab stack 12 having a defect and the first tab stack 11 having no defect are shown.

In the foregoing embodiment, the controller 303 may be, for example, a programmable logic controller (PLC), configured to perform a logic determining operation and control the first camera 301 and the second camera 302. For example, the controller may instruct the first camera 301 and the second camera 302 to capture images, transmit the images, or the like. In addition, the controller 303 may further transmit an instruction to and control another device in a production line of the battery cell 1.

The processor 304 may be, for example, a central processing unit (CPU), may receive, from the controller 303, a first image and a second image from the first camera 301 and the second camera 302, perform operations such as image recognition, analysis, and defect detection on the first image and the second image by using an algorithm such as an AI image analysis algorithm, and may further transmit a recognition result, a detection result, and the like to the controller 303.

In the foregoing embodiment, because the tab defect detection device 300 comprehensively considers defect detection results and defect positions of the first image and the second image of the two side surfaces of the tab stack to determine whether the tab stack has the folding-to-film region defect, the determination of a slight folding or wrinkling defect of a tab as a serious defect (i.e., the folding-to-film region defect) can be avoided, thereby significantly improving the cell yield and reducing the workload of manual redetermination.

According to one embodiment of the present disclosure, in the tab defect detection device 300, the controller 303 may be further configured to determine that a tab defect detection result of the battery cell 1 is unqualified in response to the tab stack having the folding-to-film region defect.

According to one embodiment of the present disclosure, in the tab defect detection device 300, to determine whether the tab stack has the folding-to-film region defect, the controller 303 may be further configured to: determine, in a case that both the first detection result and the second detection result indicate that the tab in the tab stack has a first-type defect, whether the first-type defect indicated in the first detection result and the first-type defect indicated in the second detection result correspond to a same tab; determine, in a case that the first-type defect indicated in the first detection result and the first-type defect indicated in the second detection result correspond to the same tab, whether the position of the first-type defect indicated in the first detection result and the position of the first-type defect indicated in the second detection result meet a first criterion; and determine, in a case that the first criterion is met, that the tab stack has the folding-to-film region defect.

In the foregoing embodiment, for example, whether the first-type defects in the first detection result and the second detection result correspond to a same tab (i.e., a tab on a same layer) may be determined according to a tab layer of an image of the tab stack on which the tab corresponding to the first-type defect is located.

In a case that the first-type defect indicated in the first detection result and the first-type defect indicated in the second detection result correspond to a same tab, an appropriate defect position determining criterion (for example, the foregoing first criterion) meeting an actual situation may be determined according to an original shape (i.e., a shape in a case that there is no defect such as folding or wrinkling), a size, and engineering practical experience of the same tab, and then whether the tab stack has a folding-to-film region defect is determined according to whether the position of the first-type defect indicated in the first detection result and the position of the first-type defect indicated in the second detection result meet the defect position determining criterion. Therefore, the accuracy of determining the folding-to-film region defect can be improved.

In the foregoing embodiment, as an example, the first criterion may represent that a distance between the position of the first-type defect indicated in the first detection result and the root of the tab and a distance between the position of the first-type defect indicated in the second detection result and the root of the tab are both less than or equal to a particular distance threshold (for example, 1 mm or 2 mm). As another example, in a case that the position of the defect is indicated by the foregoing ratio, the first criterion may represent that both a ratio of the distance between the position of the first-type defect indicated in the first detection result and the root of the tab to the height of the tab and a ratio of the distance between the position of the first-type defect indicated in the second detection result and the root of the tab to the height of the tab do not exceed a first threshold. The first threshold may be less than or equal to 1/2. For example, the first threshold may be 1/2, 2/5, or the like.

According to one embodiment of the present disclosure, in the tab defect detection device 300, to determine whether the position of the first-type defect indicated in the first detection result and the position of the first-type defect indicated in the second detection result meet the first criterion, the controller 303 may be further configured to: determine whether the ratio of the distance between the position of the first-type defect indicated in the first detection result and the root of the tab to the height of the tab does not exceed a second threshold; and determine whether a ratio of a distance between the position of the first-type defect indicated in the second detection result and the root of the tab to the height of the tab does not exceed the third threshold, where the second threshold is greater than 1/2 (for example, 4/5, 2/3, or the like), and the third threshold is less than 1/2 (for example, 1/3, 2/5, or the like).

According to one embodiment of the present disclosure, in the tab defect detection device 300, the first detection result and the second detection result may further indicate: whether the tab stack has a second-type defect, where the second-type defect may include a tab line loss.

According to the foregoing embodiment, in the presence of a tab line loss, the tab defect detection device 300 may determine whether the tab stack has a folding-to-film region defect by comprehensively considering the tab line loss and the position of the first-type defect, thereby more comprehensively and accurately determining whether the defect exists.

According to one embodiment of the present disclosure, in the tab defect detection device 300, to determine whether the tab stack has a folding-to-film region defect, the controller 303 may be further configured to: determine, in a case that the first detection result indicates existence of the first-type defect and the second detection result indicates existence of the second-type defect, whether the first-type defect and the second-type defect correspond to a same tab; determine, in a case that the first-type defect and the second-type defect correspond to the same tab, whether the ratio of the distance between the position of the first-type defect indicated in the first detection result and the root of the tab to the height of the tab does not exceed a fourth threshold; and determine, in a case that the ratio does not exceed the fourth threshold, that the tab stack has the folding-to-film region defect. For example, the fourth threshold may be a ratio less than or equal to 1/3.

According to the foregoing embodiment, in the presence of a tab line loss, the tab defect detection device 300 may determine whether the tab stack has a folding-to-film region defect by comprehensively considering the tab line loss and the position of the first-type defect based on a particular defect position threshold, thereby more comprehensively and accurately determining whether the defect exists.

According to one embodiment of the present disclosure, in the tab defect detection device 300, to determine whether the tab stack has a folding-to-film region defect, the controller 303 may be further configured to: determine, in a case that the first detection result indicates existence of the first-type defect and the second detection result indicates nonexistence of the first-type defect and the second-type defect in the tab corresponding to the first-type defect, whether the ratio of the distance between the position of the first-type defect indicated in the first detection result and the root of the tab to the height of the tab does not exceed a fifth threshold; and determine, in a case that the ratio does not exceed the fifth threshold, that the tab stack has the folding-to-film region defect. For example, the fifth threshold may be a ratio less than or equal to 1/5.

According to the foregoing embodiment, in the tab defect detection device 300, in a case that a first-type defect exists on one side of the tab stack and a tab corresponding to the first-type defect neither has the first-type defect nor a second-type defect on the other side, the controller 303 may determine whether a ratio of a distance between a position of the first-type defect on the side and a root of the tab to a height of the tab does not exceed a fifth threshold. If the ratio does not exceed the fifth threshold, the tab stack may have a folding-to-film region defect. Therefore, in a case that one side of the tab has the first-type defect and the other side does not have the defect, whether the tab stack has the folding-to-film region defect may be determined by comprehensively considering cases of two sides, thereby more comprehensively and accurately determining whether the defect exists.

The first to fifth thresholds and all other thresholds in the present disclosure are adjustable parameters that can be specifically determined by a person skilled in the art according to a shape and a size of a particular tab and engineering practice experience, all the foregoing thresholds are merely examples, and these examples do not constitute a limitation to the patent protection scope of the present disclosure.

It should be understood that references throughout the specification to "one embodiment" or "an embodiment" mean that a particular feature, structure, or characteristic related to the embodiment is included in at least one embodiment of the present disclosure. Therefore, "in one embodiment" or "in an embodiment" in everywhere throughout the specification does not necessarily refer to a same embodiment. Furthermore, these particular features, structures, or characteristics may be incorporated in any suitable manner in one or more embodiments. It should be understood that in various embodiments of the present disclosure, sequence numbers of the foregoing steps/processes do not mean an execution sequence. The execution sequence of the steps/processes should be determined according to functions and internal logic thereof, and should not be construed as any limitation to the implementation process of the embodiments of the present disclosure. The sequence numbers of the embodiments of the present disclosure are merely for the description purpose but do not imply the preference among the embodiments.

It should be noted that the terms "include", "comprise", or any other variation thereof in the disclosure are intended to cover a non-exclusive inclusion, so that a process, method, article, or apparatus including a series of elements not only includes those elements but also includes other elements which are not explicitly listed or further includes intrinsic elements of the process, method, article, or apparatus. Without more limitations, an element defined by a sentence "including one" does not exclude a case that there are still other same elements in the process, method, article, or apparatus that includes the element.

In the several embodiments provided in the present disclosure, it should be understood that the disclosed system, device, and method may be implemented in other manners. The device embodiments described above are merely schematic. For example, the division of the units is only a logical function division, and there may be another division mode in actual implementation. For example, a plurality of units or components may be combined, or may be integrated into another system. Alternatively, some features may be ignored, or not performed. In addition, the displayed or discussed mutual couplings or direct couplings or communication connections between the components may be implemented through some interfaces, indirect couplings or communication connections between the devices or units, or electrical connections, mechanical connections, or connections in other forms.

The units described as separate components may or may not be physically separated, and the components displayed as units may or may not be physical units. To be specific, the components may be located in one place or may be distributed on a plurality of network units. Some or all of the units may be selected according to actual needs to achieve the objectives of the solutions of this embodiment. In addition, functional units in the embodiments of the present disclosure may be integrated into one processing unit, or the units may be physically separated, or two or more units may be integrated into one unit. The integrated unit may be implemented in a form of hardware, or may be implemented in a form of hardware plus a software functional unit.

Finally, it should be noted that the foregoing embodiments are merely used for describing the technical solutions of the present disclosure, but are not intended to limit the technical solutions. Although the present disclosure is described in detail with reference to the foregoing embodiments, it should be appreciated by a person skilled in the art that modifications may still be made to the technical solutions described in the foregoing embodiments, or equivalent replacements may be made to part or all of the technical features. However, these modifications or replacements do not cause the essence of the corresponding technical solutions to deviate from the scope of the technical solutions of the embodiments of the present disclosure, and should be covered by the scope of the claims and the specification of the present disclosure. Especially, as long as there is no structural conflict, the various technical features mentioned in the embodiments may be combined in any way. The present disclosure is not limited to the particular embodiments disclosed herein, but includes all technical solutions that fall within the scope of the claims.

## Claims

1. A tab defect detection method for a battery cell, comprising:
obtaining a first image of a first side surface of a tab stack of the battery cell and a second image of a second side surface of the tab stack opposite to the first side surface, wherein the first side surface and the second side surface are two surfaces that are parallel to a stacking direction of the tab stack and extend along a height direction of a tab in the tab stack;
obtaining a first detection result of tab defect detection performed based on the first image and a second detection result of tab defect detection performed based on the second image, wherein the first detection result and the second detection result indicate: whether the tab in the tab stack has a first-type defect; and a position of the first-type defect, the first-type defect comprising a tab line abnormality, and the position of the first-type defect indicating a relative position of the first-type defect relative to a height of the tab; and
determining, based on the first detection result and the second detection result, whether the tab stack has a folding-to-film region defect.

2. The method according to claim 1, further comprising:
determining that a tab defect detection result of the battery cell is unqualified in response to the tab stack having the folding-to-film region defect.

3. The method according to claim 1 or 2, wherein the determining whether the tab stack has a folding-to-film region defect comprises:
determining, in a case that both the first detection result and the second detection result indicate that the tab in the tab stack has a first-type defect, whether the first-type defect indicated in the first detection result and the first-type defect indicated in the second detection result correspond to a same tab;
determining, in a case that the first-type defect indicated in the first detection result and the first-type defect indicated in the second detection result correspond to the same tab, whether the position of the first-type defect indicated in the first detection result and the position of the first-type defect indicated in the second detection result meet a first criterion; and
determining, in a case that the first criterion is met, that the tab stack has the folding-to-film region defect.

4. The method according to any one of claims 1 to 3, wherein the determining whether the position of the first-type defect indicated in the first detection result and the position of the first-type defect indicated in the second detection result meet a first criterion comprises:
determining whether a ratio of a distance between the position of the first-type defect indicated in the first detection result and a root of the tab to the height of the tab does not exceed a first threshold; and
determining whether a ratio of a distance between the position of the first-type defect indicated in the second detection result and the root of the tab to the height of the tab does not exceed the first threshold, wherein the first threshold is less than or equal to 1/2.

5. The method according to claim 3 or 4, wherein the determining whether the position of the first-type defect indicated in the first detection result and the position of the first-type defect indicated in the second detection result meet a first criterion further comprises:
determining whether the ratio of the distance between the position of the first-type defect indicated in the first detection result and the root of the tab to the height of the tab does not exceed a second threshold; and
determining whether the ratio of the distance between the position of the first-type defect indicated in the second detection result and the root of the tab to the height of the tab does not exceed a third threshold, wherein
the second threshold is greater than 1/2, and the third threshold is less than 1/2.

6. The method according to any one of claims 1 to 5, wherein the first detection result and the second detection result further indicate: whether the tab stack has a second-type defect, wherein the second-type defect comprises a tab line loss.

7. The method according to claim 6, wherein the determining whether the tab stack has a folding-to-film region defect comprises:
determining, in a case that the first detection result indicates existence of the first-type defect and the second detection result indicates existence of the second-type defect, whether the first-type defect and the second-type defect correspond to a same tab;
determining, in a case that the first-type defect and the second-type defect correspond to the same tab, whether the ratio of the distance between the position of the first-type defect indicated in the first detection result and the root of the tab to the height of the tab does not exceed a fourth threshold; and
determining, in a case that the ratio does not exceed the fourth threshold, that the tab stack has the folding-to-film region defect.

8. The method according to claim 6 or 7, wherein the determining whether the tab stack has a folding-to-film region defect further comprises:
determining, in a case that the first detection result indicates existence of the first-type defect and the second detection result indicates nonexistence of the first-type defect and the second-type defect in the tab corresponding to the first-type defect, whether the ratio of the distance between the position of the first-type defect indicated in the first detection result and the root of the tab to the height of the tab does not exceed a fifth threshold; and
determining, in a case that the ratio does not exceed the fifth threshold, that the tab stack has the folding-to-film region defect.

9. A tab defect detection device for a battery cell, comprising:
a first camera, opposite to a first side surface of a tab stack of the battery cell, and configured to capture a first image of the first side surface;
a second camera, opposite to a second side surface of the tab stack, and configured to capture a second image of the second side surface, wherein the first side surface and the second side surface are two surfaces that are parallel to a stacking direction of the tab stack and extend along a height direction of a tab in the tab stack;
a controller, communicatively connected to the first camera and the second camera, and configured to obtain the first image and the second image, and transmit the first image and the second image to a processor; and
the processor, communicatively connected to the controller, and configured to: perform tab defect detection based on the first image, to obtain a first detection result; and perform tab defect detection based on the second image to obtain a second detection result, wherein the first detection result and the second detection result indicate: whether the tab in the tab stack has a first-type defect; and a position of the first-type defect, wherein the first-type defect comprises a tab line abnormality, and the position of the first-type defect indicates a relative position of the first-type defect relative to a height of the tab;
wherein the controller is further configured to determine, based on the first detection result and the second detection result, whether the tab stack has a folding-to-film region defect.

10. The device according to claim 9, wherein
the controller is further configured to determine that a tab defect detection result of the battery cell is unqualified in response to the tab stack having the folding-to-film region defect.

11. The device according to claim 9 or 10, wherein to determine whether the tab stack has the folding-to-film region defect, the controller is further configured to:
determine, in a case that both the first detection result and the second detection result indicate that the tab in the tab stack has a first-type defect, whether the first-type defect indicated in the first detection result and the first-type defect indicated in the second detection result correspond to a same tab;
determine, in a case that the first-type defect indicated in the first detection result and the first-type defect indicated in the second detection result correspond to the same tab, whether the position of the first-type defect indicated in the first detection result and the position of the first-type defect indicated in the second detection result meet a first criterion; and
determine, in a case that the first criterion is met, that the tab stack has the folding-to-film region defect.

12. The device according to any one of claims 9 to 11, wherein to determine whether the position of the first-type defect indicated in the first detection result and the position of the first-type defect indicated in the second detection result meet the first criterion, the controller is further configured to:
determine whether a ratio of a distance between the position of the first-type defect indicated in the first detection result and a root of the tab to the height of the tab does not exceed a first threshold; and
determine whether a ratio of a distance between the position of the first-type defect indicated in the second detection result and the root of the tab to the height of the tab does not exceed the first threshold, wherein the first threshold is less than or equal to 1/2.

13. The device according to claim 11 or 12, wherein to determine whether the position of the first-type defect indicated in the first detection result and the position of the first-type defect indicated in the second detection result meet the first criterion, the controller is further configured to:
determine whether the ratio of the distance between the position of the first-type defect indicated in the first detection result and the root of the tab to the height of the tab does not exceed a second threshold; and
determine whether the ratio of the distance between the position of the first-type defect indicated in the second detection result and the root of the tab to the height of the tab does not exceed a third threshold, wherein
the second threshold is greater than 1/2, and the third threshold is less than 1/2.

14. The device according to any one of claims 9 to 13, wherein the first detection result and the second detection result further indicate: whether the tab stack has a second-type defect, wherein the second-type defect comprises a tab line loss.

15. The device according to claim 14, wherein to determine whether the tab stack has the folding-to-film region defect, the controller is further configured to:
determine, in a case that the first detection result indicates existence of the first-type defect and the second detection result indicates existence of the second-type defect, whether the first-type defect and the second-type defect correspond to a same tab;
determine, in a case that the first-type defect and the second-type defect correspond to the same tab, whether the ratio of the distance between the position of the first-type defect indicated in the first detection result and the root of the tab to the height of the tab does not exceed a fourth threshold; and
determine, in a case that the ratio does not exceed the fourth threshold, that the tab stack has the folding-to-film region defect.

16. The device according to claim 14 or 15, wherein to determine whether the tab stack has the folding-to-film region defect, the controller is further configured to:
determine, in a case that the first detection result indicates existence of the first-type defect and the second detection result indicates nonexistence of the first-type defect and the second-type defect in the tab corresponding to the first-type defect, whether the ratio of the distance between the position of the first-type defect indicated in the first detection result and the root of the tab to the height of the tab does not exceed a fifth threshold; and
determine, in a case that the ratio does not exceed the fifth threshold, that the tab stack has the folding-to-film region defect.
